# EUROPÄISCHE PATENTANMELDUNG

(11) **EP 3 444 936 A1**
(43) Veröffentlichungstag der Anmeldung: **20.02.2019**
(21) Anmeldenummer: 17186453.1
(22) Anmeldetag: 16.08.2017
(51) Int. Cl.: H02M 7/48

(54) **LEISTUNGSELEKTRONISCHES SYSTEM**

(71) Anmelder: Siemens Aktiengesellschaft, 80333 München (DE)
(72) Erfinder: Namyslo, Lutz, 91353 Hausen (DE)

(57) **Zusammenfassung**

Es wird ein leistungselektronisches System angegeben mit einer ersten Komponente, die einen ersten Konfigurationsdaten-Speicher umfasst und ausgestaltet ist, ihre Betriebsweise unter Verwendung von im ersten Daten-Speicher abgelegten ersten Konfigurationsdaten zu gestalten, einer zweiten Komponente, die einen zweiten Daten-Speicher umfasst und ausgestaltet ist, ihre Betriebsweise unter Verwendung von im zweiten Daten-Speicher abgelegten zweiten Konfigurationsdaten zu gestalten, wobei die zweiten Konfigurationsdaten zusätzlich im ersten Speicher abgelegt sind.

## Beschreibung

Die Erfindung betrifft ein leistungselektronisches System gemäß dem Oberbegriff von Anspruch 1 sowie ein Verfahren zum Betreiben eines leistungselektronischen Systems.

Ein immer weiter steigender Kostendruck im Bereich leistungselektronischer Produkte führt zu der Notwendigkeit einer höheren Modularität und Gleichteiligkeit. Damit lassen sich Varianten- bzw. Komplexitätskosten, die einen beträchtlichen Anteil der Kosten über den Lebenszyklus bilden, wirksam reduzieren. Gleichzeitig besteht ein starker Trend zu modularen zellenbasierten leistungselektronischen Wandlern, bei denen die Zellen reihen- und parallelgeschaltet sind. Damit werden sich die Anzahl der modularen Komponenten in einem System in Zukunft erhöhen. Einen optimalen Fall für die Modularisierung stellen Komponenten dar, die hardwareseitig identisch sind und in nur einer Variante auf Lager liegen. Erst bei der Montage des Gesamtgerätes, wenn die Ausprägung feststeht, werden die Komponenten durch Konfiguration über ihre Konfigurationsdaten (Daten und aktuelle Firmware) spezialisiert. Beispiele für solche Komponenten sind digitale Treiberbausteine für Leistungshalbleiter (Digital Gate Unit = DGU) oder Kommunikationsadapter, die teilweise eine Vorverarbeitung von Sensor- oder Steuersignalen vornehmen, um zentrale Steuereinheiten (Control Units) zu entlasten.

Das Problem bei Systemen dieser Art entsteht, wenn im Servicefall Teile ausgetauscht werden müssen. Das Ersatzteil ist, um die Varianz in der Lagerhaltung gering zu halten, noch nicht konfiguriert. Die Konfiguration wird wie in der Fertigung vor dem Einbau vorgenommen. Dieser Vorgang ist fehleranfällig und auch manipulierbar, wodurch hohe Folgekosten entstehen können. Alternativ können die Komponenten bereits konfiguriert für alle gelieferten Ausprägungen in den Ersatzteillagern bereit liegen. Das hat zur Folge, dass viele Varianten in den Lagern sein müssen und damit finanzielle Mittel binden.

Es ist Aufgabe der vorliegenden Erfindung, ein verbessertes leistungselektronisches System anzugeben, bei dem die eingangs genannten Probleme vermindert sind.

Diese Aufgabe wird gelöst durch ein leistungselektronisches System mit den Merkmalen von Anspruch 1.

Das erfindungsgemäße leistungselektronische System umfasst einen oder mehrere Leistungshalbleiter. Weiterhin umfasst das System eine erste Komponente, die einen ersten Konfigurationsdaten-Speicher, eine Kommunikationsschnittstelle und einen Mikroprozessor umfasst und eine zweite Komponente, die einen zweiten Konfigurationsdaten-Speicher, eine Kommunikationsschnittstelle und einen Mikroprozessor umfasst.

Dabei ist die erste Komponente ausgestaltet, ihre Betriebsweise unter Verwendung von im ersten Konfigurationsdaten-Speicher abgelegten ersten Konfigurationsdaten zu gestalten. Ferner ist die zweite Komponente ausgestaltet, ihre Betriebsweise unter Verwendung von im zweiten Konfigurationsdaten-Speicher abgelegten zweiten Konfigurationsdaten zu gestalten,

Die zweiten Konfigurationsdaten sind zusätzlich im ersten Speicher abgelegt.

Mit anderen Worten sind die zweiten Konfigurationsdaten, also die Konfigurationsdaten für die zweite Komponente auch im Speicher der ersten Komponente abgespeichert. Für die Erfindung wurde erkannt, dass es bei einem Austausch der zweiten Komponente vorteilhaft für das leistungselektronische System ist, wenn die Konfigurationsdaten für die zweite Komponente auch außerhalb der zweiten Komponente gespeichert sind, da diese dann nach Ausbau der zweiten Komponente weiterhin im leistungselektronischen System vorhanden sind und verwendet werden können.

Bei den Komponenten kann es sich dabei um verschiedene Systemteile des leistungselektronischen Systems handeln. Beispielsweise kann eine Komponente eine übergeordnete Steuerung, beispielsweise eine Umrichter-Steuerung sein. Weitere Möglichkeiten für die Komponenten sind Gate-TreiberEinheiten, Modulsteuerungen für modulare Mehrpunktwandler und Zellsteuerungen in zellbasierten modularen Wandleraufbauten.

Bei den Konfigurationsdaten kann es sich um die Firmware, also Programmteile oder ganze Programme und/oder um Daten im Sinne von Zahlenwerten handeln. Solche Zahlenwerte sind beispielsweise: Strom, Spannung, Leistung, Grenzwerte für Warnungen oder Fehlermeldungen, Kennlinien und/oder Modellparameter, insbesondere für Temperaturmodelle, und/oder Kalibrierwerte eines externen Messpfades.

Weist das leistungselektronische System mehr als zwei Komponenten auf, können die zweiten Konfigurationsdaten im Speicher von einer, zwei, mehreren oder allen anderen Komponenten gespeichert sein.

Vorteilhafte Ausgestaltungen des erfindungsgemäßen leistungselektronischen Systems gehen aus den von Anspruch 1 abhängigen Ansprüchen hervor. Dabei kann die Ausführungsform nach Anspruch 1 mit den Merkmalen eines der Unteransprüche oder vorzugsweise auch mit denen aus mehreren Unteransprüchen kombiniert werden. Demgemäß können für das leistungselektronische System noch zusätzlich folgende Merkmale vorgesehen werden:
- Nach Austausch der zweiten Komponente durch eine Ersatz-Komponente kann eine Übertragung der zweiten Konfigurationsdaten von der ersten Komponente zur Ersatz-Komponente stattfinden. Hierdurch werden die für den Betrieb der Ersatz-Komponente nötigen Konfigurationsdaten innerhalb des leistungselektronischen Systems bereitgestellt. Vorteilhaft müssen also die Konfigurationsdaten nicht von außen bereitgestellt werden. Auch ist es nicht nötig, dem leistungselektronischen System einen Kommunikationskanal nach außen zur Verfügung zu stellen, da die Konfigurationsdaten für die Ersatz-Komponente innerhalb des Systems bereitstehen. Dabei ist es möglich, dass bereits bestehende Konfigurationsdaten der zweiten Komponente überschrieben, also ersetzt werden.
- Die ersten Konfigurationsdaten können zusätzlich im zweiten Speicher abgelegt sein. Hierdurch werden in symmetrischer Weise auch die ersten Konfigurationsdaten in anderen Komponenten als der ersten Komponente gespeichert, also redundant im leistungselektronischen System abgelegt. Auch bei einem Austausch der ersten Komponente durch eine weitere Ersatz-Komponente können die passenden, also die ersten Konfigurationsdaten im leistungselektronischen System an die Ersatz-Komponenten gegeben werden, da sie in der zweiten Komponente gespeichert sind.

Weist das leistungselektronische System mehr als zwei Komponenten auf, können auch die ersten Konfigurationsdaten im Speicher von einer, zwei, mehreren oder allen anderen Komponenten gespeichert sein.
- Nach Austausch der zweiten Komponente durch eine Ersatz-Komponente kann eine Übertragung der ersten Konfigurationsdaten von der ersten Komponente zur Ersatz-Komponente stattfinden. Hierdurch wird sichergestellt, dass auch die ersten Konfigurationsdaten wieder redundant vorliegen und ein problemloser Austausch auch der ersten Komponente möglich ist.

Weist das leistungselektronische System mehr als zwei Komponenten auf, ist es möglich, dass das leistungselektronische System auch nach einem Austausch der zweiten Komponente immer noch eine Kopie der ersten Konfigurationsdaten aufweist, beispielsweise in einer dritten Komponente. Dennoch kann eine Übertragung der ersten Konfigurationsdaten an die Ersatz-Komponente stattfinden, um eine geplante Redundanz der ersten Konfigurationsdaten wiederherzustellen.
- Für das leistungselektronische System kann vorgesehen sein, dass ein Teil der Konfigurationsdaten oder alle Konfigurationsdaten mit einer vorgegebenen Redundanz gespeichert werden, d.h. dass die Konfigurationsdaten im Speicher von einer, zwei, drei oder mehr oder von allen Komponenten gespeichert werden. Je höher die Redundanz der Speicherung, desto flexibler kann das leistungselektronische System auf den Ausfall und Austausch von Komponenten reagieren, wobei ein entsprechender Speicherplatz in den Komponenten vorzusehen ist.

Bei Austausch der ersten, zweiten oder beliebigen anderen Komponente wird dann diese vorgegebene Redundanz durch eine Übertragung der ursprünglich im entsprechenden Daten-Speicher abgelegten Konfigurationsdaten wiederhergestellt. Sind also in dem Daten-Speicher einer dritten Komponente erste, zweite, dritte und vierte Konfigurationsdaten abgelegt, werden diese vier Konfigurationsdaten nach Austausch der dritten Komponente wieder im Daten-Speicher der Ersatz-Komponente abgelegt.
- Das leistungselektronische System kann ausgestaltet sein, beim Entfernen einer Komponente die vorgegebene Redundanz umgehend, d.h. schon vor dem Einbau einer Ersatz-Komponente wiederherzustellen, indem die in der entfernten Komponenten gespeicherten Konfigurationsdaten in den Daten-Speichern weiterer Komponenten zumindest temporär gespeichert werden. Hierdurch wird vermieden, dass ein Ausbau mehrerer Komponenten zu einer Situation führt, in der die Konfigurationsdaten für eine Komponente vollständig aus dem leistungselektronischen System entfernt sind.
- Es ist möglich, dass die Komponenten des leistungselektronischen Systems ausgestaltet sind, gemäß einer hierarchischen Ordnung miteinander zu arbeiten. Dabei nimmt die erste Komponente eine erste, beispielsweise obere Hierarchiestufe ein und die zweite Komponente eine zweite, beispielsweise untere Hierarchiestufe ein. Typischerweise sind in einem hierarchisch aufgebauten System wenige, beispielsweise eine erste Komponente einer Mehrzahl, beispielsweise zwei, drei, vier oder mehr zweiten Komponenten zugeordnet. Dabei können auch Gruppen vorliegen, in denen jeweils eine erste Komponente jeweils einer Mehrzahl, beispielsweise zwei, drei, vier oder mehr zweiten Komponenten zugeordnet sind, wobei mehrere solche Gruppen zusammen das leistungselektronische System bilden. Die ersten Komponenten können wiederum einer einzelnen dritten Komponente untergeordnet sein, wodurch die dritte Komponente die oberste Hierarchiestufe einnimmt.

Bei einem solchen leistungselektronischen System ist es vorteilhaft, wenn eine, insbesondere mehrere oder besonders vorteilhaft alle Komponenten einer Hierarchiestufe die Konfigurationsdaten der zugeordneten Komponente der höheren Hierarchiestufe speichern. Weiterhin ist es bei einem solchen leistungselektronischen System vorteilhaft, wenn eine, insbesondere mehrere oder besonders vorteilhaft alle Komponenten einer Hierarchiestufe die Konfigurationsdaten der zugeordneten Komponente der niedrigeren Hierarchiestufe speichern.

Diese Speicherung kann sich auf jeweils eine Stufe der Hierarchie erstrecken oder auch auf mehrere Stufen. Beispielsweise können alle Komponenten die Konfigurationsdaten jeweils anderer Komponenten speichern, die bis zu zwei oder drei Hierarchiestufen darüber und/oder darunter angeordnet sind.

Es kann somit ein erster Redundanzwert vorgegeben sein, der angibt, wie viele Konfigurationsdaten anderer Komponenten der gleichen Hierarchiestufe im Daten-Speicher einer Komponente gespeichert werden. Weiterhin kann ein zweiter Redundanzwert vorgegeben sein, der angibt, bis zu wie vielen Hierarchiestufen darüber Konfigurationsdaten anderer Komponenten in höheren Hierarchiestufen im Daten-Speicher einer Komponente gespeichert werden. Weiterhin kann ein dritter Redundanzwert vorgegeben sein, der angibt, bis zu wie vielen Hierarchiestufen darunter Konfigurationsdaten anderer Komponenten in niedrigeren Hierarchiestufen im Daten-Speicher einer Komponente gespeichert werden.
- Die Kommunikationsschnittstellen sind zweckmäßig direkt oder über weitere Komponenten des leistungselektronischen Systems miteinander verbunden. Die Kommunikationsschnittstellen können dabei drahtgebunden oder drahtlos ausgeführt sein. Dadurch wird der Austausch der Konfigurationsdaten ermöglicht, wobei der Austausch direkt zwischen der ersten und zweiten Komponente oder indirekt über andere Komponenten stattfinden kann. Auch weitere Komponenten des leistungselektronischen Systems können Kommunikationsschnittstellen aufweisen und die Komponenten können somit ein Kommunikationsnetzwerk im leistungselektronischen System ausbilden. Dieses Kommunikationsnetzwerk kann sternförmig oder linienförmig aufgebaut sein.
- Das leistungselektronische System kann eine Steuerungseinrichtung aufweisen, die ausgestaltet ist, einen Austausch der zweiten Komponente durch die Ersatz-Komponente zu erkennen und eine Übertragung der zweiten Konfigurationsdaten von der ersten Komponente zur Ersatz-Komponente zu bewirken.
- Wenigstens ein Teil der Komponenten des leistungselektronischen Systems können ausgestaltet sein, beim Anschalten des Systems ihre jeweiligen Konfigurationsdaten an andere Komponenten zu senden und empfangene Konfigurationsdaten von anderen Komponenten wenigstens teilweise zu speichern.

Weitere Vorteile und Merkmale sind der folgenden Beschreibung von Ausführungsbeispielen anhand der Figuren zu entnehmen. In den Figuren bezeichnen gleiche Bezugszeichen gleiche Bauteile und Funktionen.

Es zeigen schematisch:
Figur 1 einen Aufbau einer Zelle für einen zellbasiert aufgebauten hierarchisch gesteuerten Stromrichter,
Figur 2 den Aufbau einer Einheit aus mehreren der Zellen,
Figur 3 den Aufbau des Stromrichters aus mehreren der Einheiten,
Figur 4 die Steuerungshierarchie des Stromrichters,
Figur 5 den Aufbau eines modularen Mehrpunkt-Stromrichters,
Figur 6 die Steuerungshierarchie des modularen Mehrpunkt-Stromrichters im Falle gleichartiger Ansteuerung der Submodule,
Figur 7 die Steuerungshierarchie des modularen Mehrpunkt-Stromrichters im Falle verschiedener Ansteuerung der Submodule.

Im Folgenden wird für ein erstes Ausführungsbeispiel für die Erfindung ein zellbasierter hierarchischer Aufbau eines Stromrichters 600 beschrieben. Der Stromrichter 600 umfasst dabei eine Mehrzahl von Einheiten 500, die jeweils eine modularisierte Teilschaltung darstellen und ihrerseits wieder mehrere Zellen 100 umfassen. Aus diesen Zellen 100 lassen sich verschiedene Wandlerformen zusammensetzen und der gezeigte Stromrichter 600 ist somit nur beispielhaft.

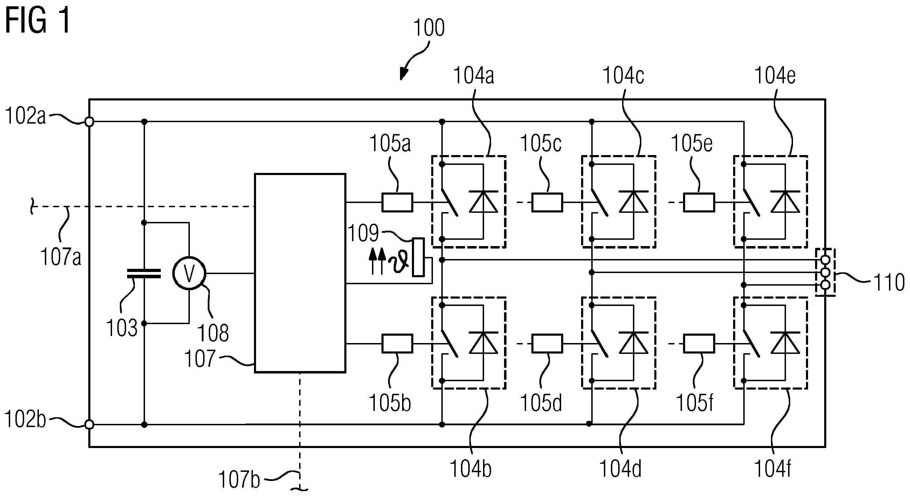

Figur 1 zeigt ein Schaltbild einer Zelle 100. Die Zelle 100 umfasst eine Leiterplatte. Die Leiterplatte ist in diesem Ausführungsbeispiel ein IMS-Substrat, kann aber auch ein FR4 Material oder eine DCB-Keramik sein. Auf der Leiterplatte ist eine erste bis dritte Halbbrücke angeordnet, die einander parallel geschaltet sind. Die Halbbrücken umfassen je zwei gleichsinnig in Serie geschaltete IGBTs 104a...f sowie je zwei zugehörige Gate-Treiberschaltungen 105a...f, über die sie von der Zell-Steuerung 107 angesteuert werden. Die Halbbrücken sind zwischen die Gleichspannungs-Anschlüsse 102a, 102b und somit parallel zum Kommutierungskondensator 103 und parallel zueinander geschaltet.

Die Zelle 100 umfasst als Lastanschlüsse zur Verbindung mit weiteren leistungselektronischen Komponenten zwei Gleichspannungs-Anschlüsse 102a, 102b sowie weiterhin drei Wechselspannungsanschlüsse 110, von denen ein erster mit dem Mittelpunkt der ersten Halbbrücke, ein zweiter mit dem Mittelpunkt der zweiten Halbbrücke und ein dritter mit dem Mittelpunkt der dritten Halbbrücke verbunden ist. Im Strompfad zu jedem der Wechselspannungsanschlüsse 110 ist ein Stromwandler vorgesehen, der aber aus Gründen der Übersicht in Figur 1 nicht gezeigt ist. Die Anschlüsse 102a, 102b, 110 sind in Figur 1 am Rand der Leiterplatte liegend gezeigt, müssen aber in der realen Umsetzung nicht am Rand liegen und auch nicht an gegenüber liegenden Seiten der Leiterplatte.

Auf der Leiterplatte sind als weitere Elemente der Zelle 100 ein Kommutierungskondensator 103, ein Spannungswandler 108, eine Zell-Steuerung 107 in Form eines Mikroprozessors und ein Temperaturfühler 109 angeordnet. Der Kommutierungskondensator 103 ist dabei zwischen die beiden Gleichspannungs-Anschlüsse 102a, 102b geschaltet. Der Kommutierungskondensator 103 kann in einem konkreten Aufbau auch aus mehreren, beispielsweise in Serie und/oder parallel geschalteten Kondensator-Bauteilen, bestehen. Parallel zum Kommutierungskondensator 103 ist der Spannungswandler 108 geschaltet. Der Spannungswandler 108 ist mit der Zell-Steuerung 107 verbunden und ermöglicht der Zell-Steuerung 107, den Ladezustand des Kommutierungskondensators 103 bei der Ansteuerung der Halbbrücken zu berücksichtigen.

Die Zell-Steuerung 107 weist im vorliegenden Ausführungsbeispiel zwei Schnittstellen auf. Eine serielle Schnittstelle 107a dient dem Datenaustausch mit einer externen, übergeordneten Steuerung. Dieser Datenaustausch kann beispielsweise die Vergabe von Sollwerten von der übergeordneten Steuerung an die Zell-Steuerung 107 sein. Ein solcher Sollwert kann beispielsweise eine Phasenlage oder Amplitude einer auszugebenden Wechselspannung sein. Der Sollwert ist dabei abstrahiert, d.h. er ist unabhängig von der konkreten Ansteuerung, die für die IGBTs 104a...f der Halbbrücke nötig ist, um die Sollwerte auch zu erreichen. Die Umsetzung der abstrahierten Sollwerte in eine konkrete Ansteuerung der IGBTs 104a...f beispielsweise in Form einer geeigneten Pulsweiten-Modulation wird von der Zell-Steuerung 107 vorgenommen.

Eine weitere Schnittstelle 107b dient der Verbindung mit einer Zell-Steuerung 107 weiterer Schaltungen, die wie die Zelle 100 aufgebaut sind. Über die weitere Schnittstelle 107b können die Zell-Steuerungen 107 beispielsweise Betriebsdaten austauschen und so eine interne Organisation der Spannungswandlung vornehmen, die unabhängig von der übergeordneten Steuerung abläuft.

Die Zell-Steuerung 107 ist weiterhin mit den Gate-Treiberschaltungen 105a...f verbunden und steuert diese an, um die IGBTs 104a...f zu schalten, beispielsweise in einem Schaltmuster einer Pulsweiten-Modulation. Die Gate-Treiberschaltungen 105a...f sind dazu über geeignete, möglichst kurze Steuerleitungen mit den Gate-Kontakten der IGBTs 104a...f verbunden.

Im Bereich zwischen den beiden IGBTs 104a...f, d.h. zwischen ihrer tatsächlichen Position auf der Leiterplatte ist ein Temperaturfühler 109, beispielsweise in Form eines Platinwiderstands angeordnet. Der Temperaturfühler 109 ist ebenso wie der Stromwandler mit der Zell-Steuerung 107 verbunden. Die Zell-Steuerung 107 verfügt somit über Werte für den Ausgangsstrom, die Eingangsspannung und die Temperatur im Bereich der Halbbrücken, um eine geeignete Steuerung der IGBTs 104a...f vorzunehmen und ggfs. Meldungen über Fehlerfälle über die serielle Schnittstelle 107a auszugeben.

Die Zelle 100 erlaubt die Ausgabe beispielsweise einer dreiphasigen Wechselspannung, wobei eine übergeordnete Steuerung wiederum abstrahierte Sollwerte zu der Wechselspannung wie Phasenlage, Frequenz und/oder Amplitude vorgeben kann. Die Zell-Steuerung 107 kann auch so ausgelegt sein, dass die drei erzeugten einzelnen Wechselspannungssignale nicht um 120° phasenversetzt zueinander sind, sondern mit einem frei wählbaren Phasenversatz erzeugt werden. Beispielsweise können alle drei Wechselspannungssignale phasengleich erzeugt werden.

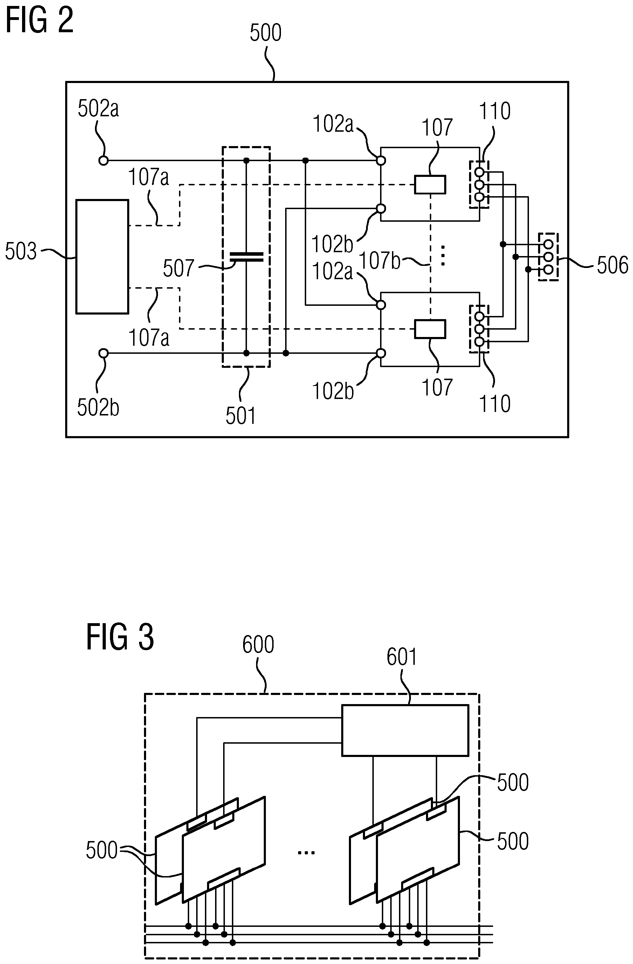

Eine Mehrzahl von Zellen 100 wird zu einer Wandler-Untereinheit 500, kurz Einheit 500, zusammengefasst, deren Aufbau in Figur 2 dargestellt ist. Die Einheit 500 umfasst in diesem Beispiel sechs Zellen 100, von denen in Figur 2 aus Gründen der Übersichtlichkeit nur zwei dargestellt sind. Typischerweise umfasst eine Einheit 500 zwischen zwei und 15 Zellen 100, insbesondere zwischen vier und 10 Zellen 100. Die Zellen 100 sind parallel zueinander mit dem Zwischenkreis 501 verbunden, d.h. die ersten Gleichspannungsanschlüsse 102a mit dem ersten Anschluss 502a und die zweiten Gleichspannungsanschlüsse 102b mit dem zweiten Anschluss 502b.

Die Einheit 500 umfasst weiterhin einen Zwischenkreis 501 mit einem Kondensator 507 und eine Einheiten-Steuerung 503, die über Steuerleitungen 107a mit den Zell-Steuerungen 107 verbunden ist. Die Zell-Steuerungen 107 sind untereinander wiederum durch Querverbindungen 107b verbunden. Dabei sind die Querverbindungen 107b optional, da auch ein sternförmiges Anschlussschema möglich ist, bei dem nur die Steuerleitungen 107a verwendet werden. Eine weitere Alternative besteht darin, dass nur eine einzelne Steuerleitung 107a verwendet wird und die damit angesteuerte Zelle 100 die Steuerbefehle über die Querverbindungen 107b weitergibt.

Die Wechselspannungsanschlüsse 110 der Zellen 100 sind zusammengeschlossen zu einem zweiten, dreiphasigen Anschluss 506. Mit anderen Worten sind die Zellen 100 also parallel geschaltet. Die Leistungshalbleiter-Schalter 104a... innerhalb der einzelnen Zellen 100 werden dabei synchron und hart geschaltet. Insgesamt bilden die zusammengeschalteten Zellen 100 zusammen mit dem Zwischenkreis 501 und der Einheiten-Steuerung 503 eine Einheit 500 aus, die als Gleichrichter oder als Wechselrichter arbeiten kann. Die Gesamtleistung ergibt sich aus den summierten Leistungsdaten der Zellen 100.

Werden 16 solche Einheiten 500 zusammengeschlossen, lässt sich beispielsweise ein Umrichter 600 mit einer Leistung von 5,3 MW aufbauen. Dieser Umrichter 600 umfasst 16*6, also 96 Zellen 100 mit insgesamt 576 einzelnen Leistungshalbleitern. Diese Leistungshalbleiter werden von 576 Gate-Treiberschaltungen angesteuert. Die Gate-Treiberschaltungen bilden damit in der Steuerung des Umrichters die unterste Hierarchie-Ebene. Darüber bilden die Zell-Steuerungen 107 die nächstfolgende Hierarchie-Ebene, gefolgt von den Einheiten-Steuerungen 503 und schließlich als oberster Ebene der Umrichter-Steuerung 601.

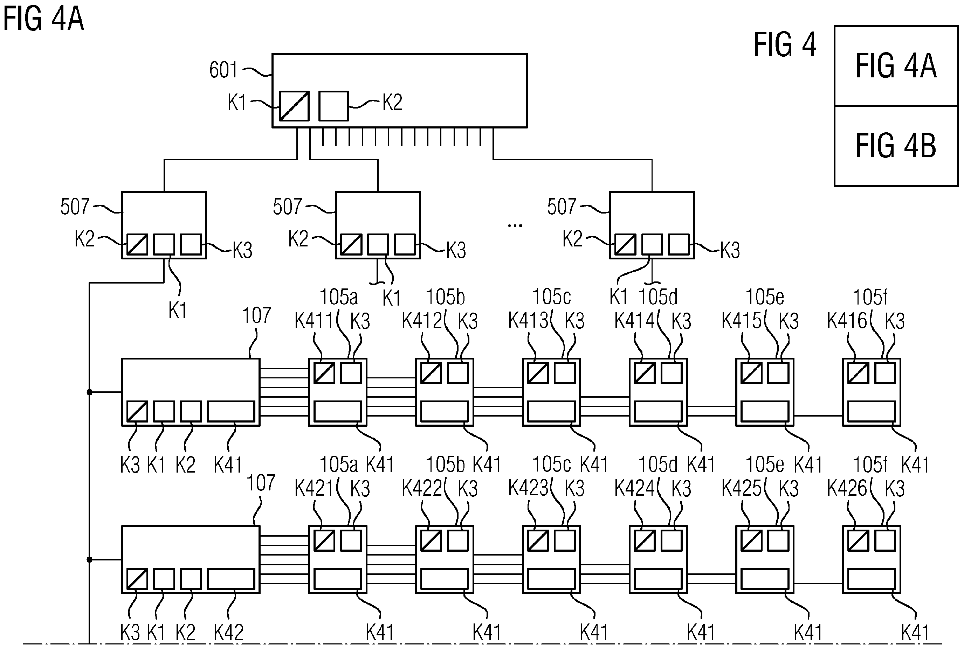

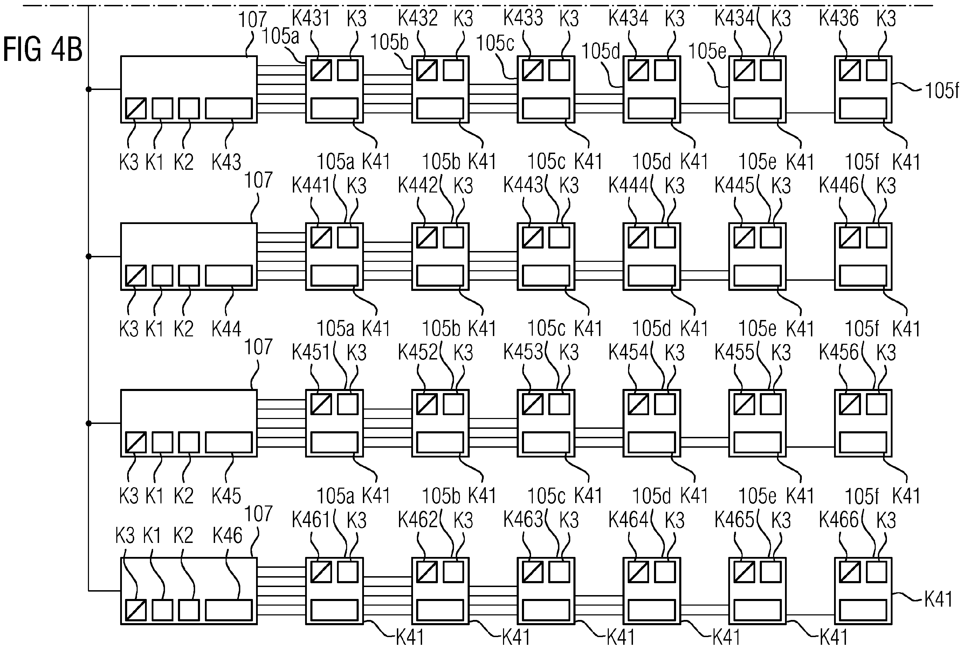

Die sich ergebende Vernetzung der jeweiligen Steuerkomponenten und Gate-Treibereinheiten ist in Figur 4 schematisch und vereinfacht dargestellt. An oberster Stelle steht dabei die Umrichter-Steuerung 601. Die Umrichter-Steuerung 601 umfasst wie die weiteren Komponenten, die in Figur 4 dargestellt sind, einen nicht-flüchtigen Konfigurationsdaten-Speicher, der in Figur 4 nicht dargestellt ist. Daneben umfasst die Umrichter-Steuerung 601 einen Mikroprozessor und einen flüchtigen Datenspeicher. Aus Gründen der Übersichtlichkeit sind in Figur 4 aber nur die im Konfigurationsdaten-Speicher festgehaltenen Konfigurationsdaten für die Komponenten gezeigt.

In der Umrichter-Steuerung 601 sind zwei verschiedene Sätze von Konfigurationsdaten K1, K2 gespeichert. Die ersten Konfigurationsdaten K1 sind die Konfigurationsdaten für die Umrichter-Steuerung 601 selbst, die benötigt werden, um die Aufgabe als Umrichter-Steuerung 601 ausführen zu können. Das hierfür in Figur 1 verwendete Symbol wird auch bei den anderen Komponenten verwendet, um die jeweiligen Konfigurationsdaten zu kennzeichnen, die die jeweilige Komponente selbst betreffen. Zusätzlich sind in der Umrichter-Steuerung 601 auch zweite Konfigurationsdaten K2 gespeichert, die die Einheiten-Steuerungen 507 betreffen. In diesem Beispiel wird davon ausgegangen, dass die zweiten Konfigurationsdaten K2 für die Einheiten-Steuerungen 507 übereinstimmen, sich also für die verschiedenen Einheiten-Steuerungen 507 nicht voneinander unterscheiden. Daher muss auch nur ein einziger Satz von zweiten Konfigurationsdaten K2 gespeichert werden. Würden sich die Konfigurationsdaten K2 für die Einheiten-Steuerungen 507 voneinander unterscheiden, wäre es auch möglich, 16 verschiedene Sätze von zweiten Konfigurationsdaten K2 im Konfigurationsdaten-Speicher der Umrichter-Steuerung 601 zu speichern.

Figur 4 zeigt aus Gründen der Übersichtlichkeit von den 16 vorhandenen Einheiten-Steuerungen 507 nur drei. Im Konfigurationsdaten-Speicher der Einheiten-Steuerungen 507 sind die zweiten Konfigurationsdaten K2 abgelegt, die die jeweilige Einheiten-Steuerung 507 selbst betreffen. Weiterhin sind im Konfigurationsdaten-Speicher der Einheiten-Steuerungen 507 aber auch die ersten Konfigurationsdaten K1 abgelegt. Hierdurch sind also die ersten und zweiten Konfigurationsdaten K1, K2 bereits in den oberen beiden Hierarchiestufen des Umrichters 600 jeweils 17 mal abgespeichert, was eine ausreichende Redundanz für die Daten schafft, um auch bei Ausfall einzelner Komponenten sicherzustellen, dass die Konfigurationsdaten noch zur Verfügung stehen.

Zusätzlich sind in den Einheiten-Steuerungen 507 auch dritte Konfigurationsdaten K3 abgelegt, die die Konfigurationsdaten für den Betrieb der Zell-Steuerungen 107 darstellen. Auch hier soll beispielhaft davon ausgegangen werden, dass die dritten Konfigurationsdaten K3 sich zwischen den Zell-Steuerungen 107 nicht unterscheiden, dass also nur ein einzelner Satz von dritten Konfigurationsdaten K3 gespeichert werden muss.

Jede der Einheiten 500 umfasst sechs Zellen 100. Jeder der Einheiten-Steuerungen 507 sind somit sechs Zell-Steuerungen 107 zugeordnet. Diese sechs Zell-Steuerungen 107 sind in Figur 4 nur für die erste Einheiten-Steuerung 507 gezeigt, wiederum aus Gründen der Übersichtlichkeit. In den Konfigurationsdaten-Speichern der Zell-Steuerungen 107 sind die dritten Konfigurationsdaten K3 gespeichert, die die Zell-Steuerungen 107 selbst betreffen. Weiterhin sind auch hier die ersten und zweiten Konfigurationsdaten K1, K2 abgelegt. Zusätzlich sind im Konfigurationsdaten-Speicher einer ersten der Zell-Steuerungen 107 Konfigurationsdaten K41 abgelegt. Die Konfigurationsdaten K41 betreffen die der Zell-Steuerung 107 zugeordneten Gate-Treiberschaltungen. Dabei handelt es sich um unterschiedliche Konfigurationsdaten für jede einzelne der Gate-Treiberschaltungen 105a...f, also um sechs verschiedene Sätze von Konfigurationsdaten K41, die der Einfachheit halber als ein Element dargestellt sind in Figur 4. Eine zweite Zell-Steuerung 107 speichert Konfigurationsdaten K42, die sich von den Konfigurationsdaten K41 unterschieiden können, aber nicht müssen. Die Konfigurationsdaten K42 sind die Konfigurationsdaten für die Gate-Treiberschaltungen 105a...f dieser Zell-Steuerung. Analog werden die Konfigurationsdaten K43...46 in den weiteren Zell-Steuerungen 107 dieser Einheiten-Steuerung 507 gespeichert.

In den Gate-Treiberschaltungen 105a...f werden analog zu den bisherigen Komponenten die Konfigurationsdaten K411...K466 für die jeweilige Gate-Treiberschaltung 105a...f sowie die dritten Konfigurationsdaten und die Konfigurationsdaten 41...46 für die jeweilige Zelle 100 gespeichert. Im Unterschied zu den Zell-Steuerungen 107 und den Einheiten-Steuerungen 507 handelt es sich bei den Konfigurationsdaten K411...466 für die einzelnen Gate-Treiberschaltungen 105a...f um Konfigurationsdaten, die sich von Gate-Treiberschaltung 105a...f zu Gate-Treiberschaltung 105a...f verändern kann. Beispielsweise können unterschiedliche Konfigurationsdaten dadurch zustande kommen, dass längere Signalwege zwischen einer Gate-Treiberschaltung 105a...f und dem zugeordneten IGBT 104a...f vorliegen als bei anderen Gate-Treiberschaltungen 105a...f.

Die Speicherung der Konfigurationsdaten wird typischerweise beim ersten Hochfahren des Umrichters 600 einmalig vorgenommen. Da die Konfigurationsdaten-Speicher nicht-flüchtig sind, ist damit eine dauerhafte Sicherung der Konfigurationsdaten erreicht. Die in diesem Beispiel erreichte Redundanz der Konfigurationsdaten ist sehr hoch. So liegen die ersten, zweiten und dritten Konfigurationsdaten K1, K2, K3 jeweils mehr als einhundert Mal vor im Umrichter 600. Die Konfigurationsdaten K41...46 liegen jeweils sieben Mal vor. Dadurch ist weitgehend sichergestellt, dass bei Ausfall und Austausch einer oder auch mehrerer Komponenten die Konfigurationsdaten für diese Komponente(n) immer noch im Umrichter 600 vorhanden sind.

Muss eine Komponente des Umrichters 600 ausgetauscht werden, wird diese entfernt und durch eine neue ersetzt. Diese neue Komponente kann entweder frei von Konfigurationsdaten sein oder sogar alte Konfigurationsdaten umfassen, die für die neue Aufgabe ungeeignet sind und angepasst werden müssen. Nach dem Einbau der neuen Komponente werden die Konfigurationsdaten für die neue Komponente daher von den verbundenen Komponenten an die neue Komponente übertragen. Wird beispielsweise eine Einheiten-Steuerung 507 ersetzt, kann die Umrichter-Steuerung 601 beim Anschalten des Umrichters die zweiten Konfigurationsdaten K2 an die neue Einheiten-Steuerung 507 übertragen. Alternativ können die zweiten Konfigurationsdaten K2 auch von einer der anderen Einheiten-Steuerungen 507 oder sogar von einer der Zell-Steuerungen 107 an die neue Einheiten-Steuerung 507 weitergegeben werden.

Weiterhin werden nach dem Einbau der neuen Einheiten-Steuerung 507 auch die Konfigurationsdaten der anderen Komponenten wieder an die neue Einheiten-Steuerung 507 übermittelt, so dass im Konfigurationsdaten-Speicher der neuen Einheiten-Steuerung 507 wieder alle Konfigurationsdaten gespeichert sind, die vorher vorhanden waren. Mit anderen Worten wird die vorher vorhandene Redundanz nach dem Einbau einer neuen Komponente wieder hergestellt.

Ein weiteres Beispiel für die Erfindung wird anhand eines modularen Mehrpunkt-Wandlers, auch als modularer Mehrstufenumrichter oder englisch modular multilevel converter, M2C oder MMC bekannt, beschrieben. Ein modularer Mehrstufenumrichter ist ein Umrichter zum Umwandeln einer Spannung in eine andere Spannung. Ein modularer Mehrstufenumrichter kann z.B. eine Gleichspannung in eine Wechselspannung umwandeln, d.h. er wird als Wechselrichter verwendet. Ein modularer Mehrstufenumrichter kann außerdem z.B. eine Wechselspannung in eine Gleichspannung umwandeln, d.h. er wird als Gleichrichter verwendet. Weiterhin kann ein modularer Mehrstufenumrichter eine Wechselspannung in eine in der Frequenz und Amplitude unterschiedliche Wechselspannung umwandeln, ohne zunächst eine Gleichspannung zu erzeugen, d.h. er wird als direkter Umrichter verwendet.

Ein mögliches Anwendungsfeld eines modularen Mehrstufenumrichters als Wechselrichter liegt in einem Photovoltaikkraftwerk, in welchem die durch das Kraftwerk erzeugte Gleichspannung in eine Wechselspannung umgewandelt werden muss, um letztere in ein Wechselstromnetz einspeisen zu können.

Ein modularer Mehrstufenumrichter als Gleichrichter wird beispielsweise in der Hochspannungs-Gleichstrom-Übertragung benötigt. Dabei wird aus einer Wechselspannung eine Gleichspannung erzeugt, welche zum verlustarmen Transport über weite Übertragungsstrecken hinweg genutzt wird. Nach der Übertragung wird die Gleichspannung wiederum mit einem modularen Mehrstufenumrichter als Wechselrichter in eine Wechselspannung umgewandelt, um diese in das Wechselstromnetz einzuspeisen.

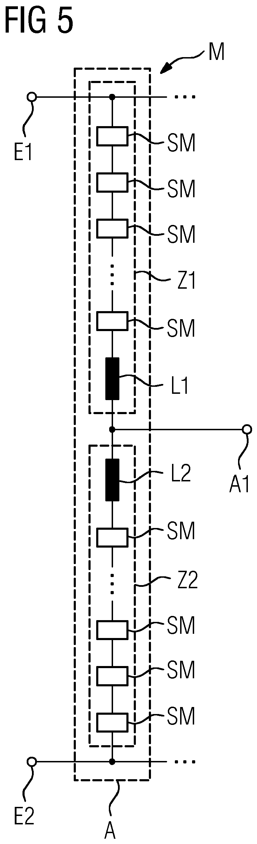

Figur 5 zeigt einen beispielhaften modularen Mehrstufenumrichter M für eine einphasige Anwendung. Der modulare Mehrstufenumrichter M umfasst einen einzelnen Arm A, der durch einen Ausgangsanschluss A1 in einen oberen Zweig Z1 und einen unteren Zweig Z2 unterteilt wird. Die Außenanschlüsse des Arms A sind mit einem ersten und einem zweiten Eingangsanschluss E1, E2 verbunden. Die Bezeichnung als Eingang und Ausgang ist dabei nur beispielhaft, da die Zuordnung von Eingang und Ausgang von der Anwendung des modularen Mehrstufenumrichters abhängt und der modulare Mehrstufenumrichter auch bidirektional arbeiten kann.

Der erste und der zweite Zweig Z1, Z2 umfassen jeweils eine Reihenschaltung von Submodulen SM und zum Ausgangsanschluss A1 hin eine Zweig-Induktivität L1, L2. Die Submodule SM umfassen jeweils wenigstens einen Energiespeicher, typischerweise einen Kondensator, und ein Schaltnetzwerk, mit dem der Energiespeicher überbrückt oder zwischen den Ein- und Ausgangsanschluss des jeweiligen Submoduls SM geschaltet werden kann.

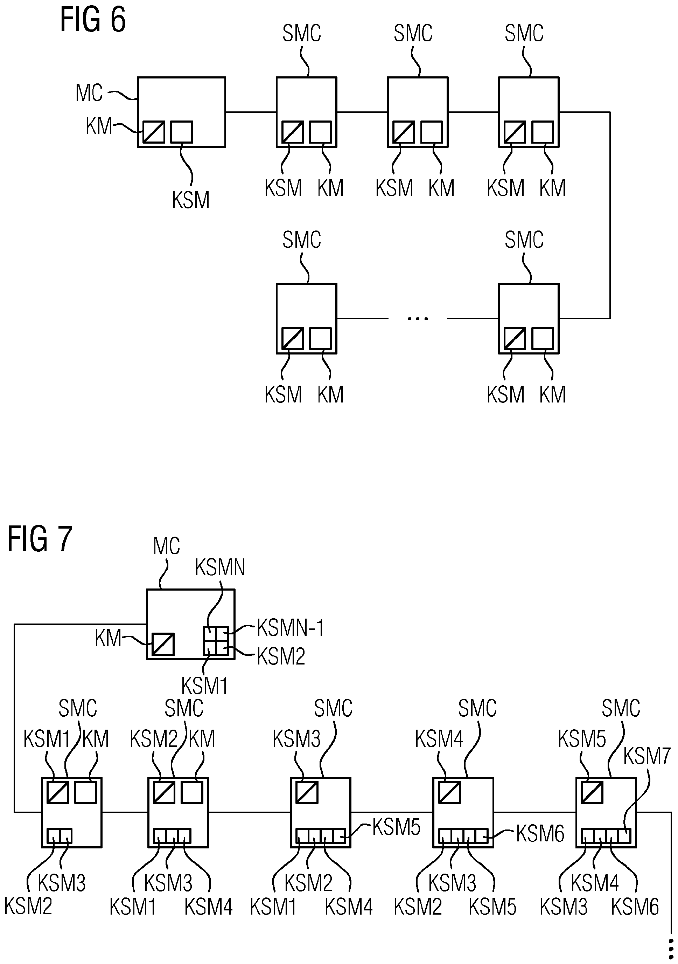

Figur 6 zeigt eine schematische Darstellung der Steuerung für den modularen Mehrstufenumrichter M. Diese umfasst eine Gesamtsteuerung MC, die den Gesamtbetrieb des modularen Mehrstufenumrichters M steuert und überwacht. Dieser hierarchisch untergeordnet sind die Modulsteuerungen SMC der einzelnen Submodule SM. Der tatsächliche Aufbau gemäß Figur 6 zeigt, dass die Gesamtsteuerung MC und die Modulsteuerungen SMC eine linienförmige Kommunikationsverbindung, beispielsweise als Kommunikationsbus aufweisen.

Die Modulsteuerungen SMC umfassen in diesem Beispiel die Gate-Treiberschaltungen für das jeweilige Schaltnetzwerk des Submoduls SM. Dadurch gibt es unterhalb der Modulsteuerungen SMC keine weitere Ebene von Steuerungen mehr. Auch wird in diesem Beispiel davon ausgegangen, dass die Submodule SM derart gleichartig aufgebaut sind, dass die Konfigurationsdaten für alle Submodule SM übereinstimmen. In anderen Aufbauformen ist es aber auch möglich, dass zwischen den Modulsteuerungen SMC und der Gesamtsteuerung MC eine weitere Hierarchieebene, beispielsweise in Form einer Zweigsteuerung vorhanden ist.

Die Gesamtsteuerung MC speichert in diesem Beispiel sowohl die eigenen Konfigurationsdaten KM als auch die Konfigurationsdaten KSM für die Modulsteuerungen SMC. Das gleiche gilt für die Modulsteuerungen SMC selbst, in denen sowohl die eigenen Konfigurationsdaten KSM als auch jene für die Gesamtsteuerung MC. Der benötigte Speicherplatz im nichtflüchtigen Konfigurationsdaten-Speicher ist also bei allen Steuerungen MC, SMC gleich gering und die erzielte Redundanz für die Konfigurationsdaten KM, KSM ist hoch, da alle Konfigurationsdaten KM, KSM ca. so oft vorliegen wie der modulare Mehrstufenumrichter M Submodule SM aufweist.

Bei einem ersten hochlaufen des modularen Mehrstufenumrichters M werden die Konfigurationsdaten zwischen den einzelnen Steuerungen MC, SMC ausgetauscht und redundant gespeichert. Wird ein Submodul SM und damit die zugehörige Modulsteuerung SMC ausgetauscht, stellt der modulare Mehrstufenumrichter M beim nächsten Betriebsstart fest, dass ein Austausch stattgefunden hat, beispielsweise über einen Vergleich mit der bisherigen Konfiguration. Das Ersatz-Submodul SM erhält daraufhin die eigenen Konfigurationsdaten KSM sowie auch die Konfigurationsdaten KM für die Gesamtsteuerung MC übermittelt. Diese Übermittlung kann sowohl von der Gesamtsteuerung MC als auch von einem anderen Submodul SM ausgehen.

In einem weiteren Beispiel soll davon ausgegangen werden, dass sich die Konfigurationsdaten für die Submodule SM unterscheiden, beispielsweise bedingt durch die Ansteuerung der Leitungshalbleiter oder weil systematisch verschiedene Ausführungsformen von Submodulen SM miteinander verwendet werden. In diesem Fall liegen unter Umständen hunderte von verschiedenen Konfigurationsdaten vor, die redundant gespeichert werden sollen. Da der Speicherplatz für Konfigurationsdaten begrenzt ist, können nicht einfach alle Modulsteuerungen SMC sämtliche Konfigurationsdaten speichern. Stattdessen kann beispielsweise eine Art der Speicherung gewählt werden, die in Figur 7 dargestellt ist.

Hierbei speichert die Gesamtsteuerung MC zusätzlich zu den eigenen Konfigurationsdaten KM auch die Konfigurationsdaten KSM1, KSM2 einer ersten und zweiten Modulsteuerung SMC sowie die Konfigurationsdaten KSMN-1 und KSMN einer vorletzten und letzten Modulsteuerung SMC. Die erste Modulsteuerung SMC speichert ihrerseits die Konfigurationsdaten KM der Gesamtsteuerung MC, die eigenen Konfigurationsdaten KSM1 und Konfigurationsdaten KSM2, KSM3 der zweiten und einer nächstfolgenden dritten Modulsteuerung SMC. Die zweite Modulsteuerung SMC speichert die Konfigurationsdaten KM der Gesamtsteuerung MC, die eigenen Konfigurationsdaten KSM2 und Konfigurationsdaten KSM1, KSM3, KSM4 der ersten, dritten und einer nächstfolgenden vierten Modulsteuerung SMC. Die folgenden Modulsteuerungen SMC speichern jeweils ihre eigenen Konfigurationsdaten und die der umliegenden zwei Modulsteuerungen SMC. Die letzten beiden Modulsteuerungen SMC verhalten sich wie die ersten beiden Modulsteuerungen SMC.

Auf diese Weise wird für alle Konfigurationsdaten KM, KSM1...N erreicht, dass sie viermal außerhalb der jeweiligen Komponente gespeichert sind und somit verhältnismäßig sicher eine Weitergabe der Konfigurationsdaten KM, KSM1...N nach einem Austausch einer oder mehrerer Komponenten durchgeführt werden kann. Dabei werden aber in allen Komponenten maximal 5 Sätze von Konfigurationsdaten KM, KSM1...N gespeichert.

## Patentansprüche

1. Leistungselektronisches System (600, M) mit
- wenigstens einem Leistungshalbleiter (104a...f),
- einer ersten Komponente (105a...f, 100, 500), die einen ersten Konfigurationsdaten-Speicher, eine Kommunikationsschnittstelle (107a, 107b) und einen Mikroprozessor umfasst,
- einer zweiten Komponente (105a...f, 100, 500), die einen zweiten Konfigurationsdaten-Speicher, eine Kommunikationsschnittstelle (107a, 107b) und einen Mikroprozessor umfasst wobei
- die erste Komponente (105a...f, 100, 500) ausgestaltet ist, ihre Betriebsweise unter Verwendung von im ersten Konfigurationsdaten-Speicher abgelegten ersten Konfigurationsdaten (K1...46, KM, KSM1...N) zu gestalten,
- die zweite Komponente (105a...f, 100, 500) ausgestaltet ist, ihre Betriebsweise unter Verwendung von im zweiten Konfigurationsdaten-Speicher abgelegten zweiten Konfigurationsdaten (K1...46, KM, KSM1...N) zu gestalten,
**dadurch gekennzeichnet, dass**
die zweiten Konfigurationsdaten (K1...46, KM, KSM1...N) zusätzlich im ersten Konfigurationsdaten-Speicher abgelegt sind.

2. Leistungselektronisches System (600, M) nach Anspruch 1, derart ausgestaltet, dass nach Austausch der zweiten Komponente (105a...f, 100, 500) durch eine Ersatz-Komponente (105a...f, 100, 500) eine Übertragung der zweiten Konfigurationsdaten (K1...46, KM, KSM1...N) von der ersten Komponente (105a...f, 100, 500) zur Ersatz-Komponente (105a...f, 100, 500) stattfindet.

3. Leistungselektronisches System (600, M) nach Anspruch 1 oder 2, bei dem die ersten Konfigurationsdaten (K1...46, KM, KSM1...N) zusätzlich im zweiten Konfigurationsdaten-Speicher abgelegt sind.

4. Leistungselektronisches System (600, M) nach einem der vorangehenden Ansprüche, das eine oder mehrere dritte Komponenten (105a...f, 100, 500) umfasst, die jeweils einen dritten Konfigurationsdaten -Speicher umfassen und ausgestaltet sind, ihre Betriebsweise unter Verwendung von im jeweiligen dritten Konfigurationsdaten-Speicher abgelegten dritten Konfigurationsdaten (K1...46, KM, KSM1...N) zu gestalten, wobei eine oder mehrere der dritten Konfigurationsdaten (K1...46, KM, KSM1...N) zusätzlich im ersten Konfigurationsdaten-Speicher abgelegt sind.

5. Leistungselektronisches System (600, M) nach einem der vorangehenden Ansprüche, bei dem die Komponenten (105a...f, 100, 500) ausgestaltet sind, gemäß einer hierarchischen Ordnung miteinander zu arbeiten, wobei die erste Komponente (105a...f, 100, 500) eine erste Hierarchiestufe einnimmt und die zweite Komponente (105a...f, 100, 500) eine zweite Hierarchiestufe einnimmt.

6. Leistungselektronisches System (600, M) nach einem der vorangehenden Ansprüche, derart ausgestaltet, dass wenigstens ein Teil der Konfigurationsdaten (K1...46, KM, KSM1...N) sowohl im Konfigurationsdaten-Speicher der zugeordneten Komponente als auch in einem, zwei oder mehr weiteren Konfigurationsdaten-Speichern abgelegt sind.

7. Leistungselektronisches System (600, M) nach einem der vorangehenden Ansprüche, derart ausgestaltet, dass die Konfigurationsdaten (K1...46, KM, KSM1...N) ausgewählt sind aus:
- Firmware;
- Strom, Spannung, und/oder Leistung;
- Grenzwerte für Warnungen oder Fehlermeldungen;
- Kennlinien und/oder Modellparameter, insbesondere für Temperaturmodelle; und/oder
- Kalibrierwerte, beispielsweise Signallaufzeiten oder Offsetwerte.

8. Leistungselektronisches System nach einem der vorangehenden Ansprüche, bei dem die erste und zweite Kommunikationsschnittstelle (107a, 107b) direkt oder über weitere Komponenten (105a...f, 100, 500) des leistungselektronischen Systems (600, M) miteinander verbunden sind.

9. Leistungselektronisches System (600, M) nach einem der vorangehenden Ansprüche mit einer Steuerungseinrichtung (601), die ausgestaltet ist, einen Austausch der zweiten Komponente (105a...f, 100, 500) durch die Ersatz-Komponente (105a...f, 100, 500) zu erkennen und eine Übertragung der zweiten Konfigurationsdaten (K1...46, KM, KSM1...N) von der ersten Komponente (105a...f, 100, 500) zur Ersatz-Komponente (105a...f, 100, 500) zu bewirken.

10. Leistungselektronisches System (600, M) nach einem der vorangehenden Ansprüche, bei dem eine der Komponenten (105a...f, 100, 500) ausgestaltet ist, Schalthandlungen des Leistungshalbleiters (104a...f) zu steuern.

11. Leistungselektronisches System (600, M) nach einem der vorangehenden Ansprüche, bei dem die Konfigurationsdaten (K1...46, KM, KSM1...N) verschlüsselt abgelegt sind.

12. Leistungselektronisches System (600, M) nach einem der vorangehenden Ansprüche, bei dem die Konfigurationsdaten (K1...46, KM, KSM1...N) bei der Übertragung von einer Komponente (105a...f, 100, 500) zu einer anderen Komponente (105a...f, 100, 500) verschlüsselt übertragen werden, insbesondere mit einer Verschlüsselung nach einem Public-Key/Private-Key-Verfahren.

13. Leistungselektronisches System (600, M) nach einem der vorangehenden Ansprüche, bei dem bei der Übertragung von Konfigurationsdaten (K1...46, KM, KSM1...N) von einer Komponente (105a...f, 100, 500) zu einer anderen Komponente (105a...f, 100, 500) ein Streuwert der Konfigurationsdaten (K1...46, KM, KSM1...N) überprüft wird.
